# EUROPEAN PATENT SPECIFICATION

(11) **EP 4 332 842 B1**
(45) Date of publication and mention of the grant of the patent: **22.07.2026**
(21) Application number: 22795241.3
(22) Date of filing: 18.02.2022
(51) Int. Cl.: G06N 10/40, G06N 10/70

(54) **QUANTUM CALCULATION CONTROL DEVICE, QUANTUM COMPUTER, AND QUANTUM CALCULATION CONTROL METHOD**
QUANTENBERECHNUNGSSTEUERUNGSVORRICHTUNG, QUANTENCOMPUTER UND QUANTENBERECHNUNGSSTEUERUNGSVERFAHREN
DISPOSITIF DE COMMANDE DE CALCUL QUANTIQUE, ORDINATEUR QUANTIQUE ET PROCÉDÉ DE COMMANDE DE CALCUL QUANTIQUE

(30) Priority: 27.04.2021 US 202163180500 P; 31.05.2021 JP 2021091832
(43) Date of publication of application: 06.03.2024
(73) Proprietor: Japan Science and Technology Agency, Kawaguchi-shi, Saitama 332-0012 (JP)
(72) Inventor: NAKAMURA Yasunobu, Tokyo 153-8904 (JP); TABUCHI Yutaka, Wako-shi Saitama 351-0198 (JP); TAMATE Shuhei, Tokyo 153-8904 (JP)
(74) Representative: Noble, Nicholas
(86) International application number: PCT/JP2022/006684
(87) International publication number: WO 2022/230318

(56) References cited:
- EP-A1- 3 300 004
- CN-A- 111 967 603
- US-B1- 10 374 612
- JAY M. GAMBETTA ET AL: "Building logical qubits in a superconducting quantum computing system", NPJ QUANTUM INFORMATION, vol. 3, no. 1, 13 January 2017 (2017-01-13), XP055456124, DOI: 10.1038/s41534-016-0004-0
- HOLMES ADAM ADHOLMES@UCHICAGO EDU ET AL: "NISQ+ boosting quantum computing power by approximating quantum error correction", PROCEEDINGS OF THE ACM/SPEC INTERNATIONAL CONFERENCE ON PERFORMANCE ENGINEERING, ACMPUB27, NEW YORK, NY, USA, 30 May 2020 (2020-05-30), pages 556 - 569, XP058563225, ISBN: 978-1-4503-8198-7, DOI: 10.1109/ISCA45697.2020.00053
- YOSUKE UENO ET AL: "QECOOL: On-Line Quantum Error Correction with a Superconducting Decoder for Surface Code", ARXIV.ORG, CORNELL UNIVERSITY LIBRARY, 201 OLIN LIBRARY CORNELL UNIVERSITY ITHACA, NY 14853, 26 March 2021 (2021-03-26), XP081917435
- JAY M. GAMBETTA, JERRY M. CHOW, MATTHIAS STEFFEN: "Building logical qubits in a superconducting quantum computing system", NPJ QUANTUM INFORMATION, vol. 3, no. 1, 1 December 2017 (2017-12-01), XP055456124, DOI: 10.1038/s41534-016-0004-0

## Description

### Technical Field

This disclosure relates to a quantum computation controller, a quantum computer and a quantum computation control method.

This application claims priority based on U.S. Provisional Patent Application No. 63180500 and Japanese Patent Application No.2021-091832.

### Background Art

A superconducting decoding quantum computation circuit with a three-dimensional structure in which signal lines enter and exit from the bottom or top surface of the substrate with respect to the qubits has been proposed, which is disclosed in Patent Literature 1, for example.

### Patent Literature 1 JP2020-061447

Reference is made to Jay M. Gambetta ET AL: "Building logical qubits in a superconducting quantum computing system", npj Quantum Information, vol. 3, no. 1, 13 January 2017 (2017-01-13), XP055456124, DOI: 10.1038/s41534-016-0004-0.

Reference is made to HOLMES ADAM ADHOLMES@UCHICAGO EDU ET AL: "NISQ+ boosting quantum computing power by approximating quantum error correction", PROCEEDINGS OF THE ACM/SPEC INTERNATIONAL CONFERENCE ON PERFORMANCE ENGINEERING, ACMPUB27, NEW YORK, NY, USA, 30 May 2020 (2020-05-30), pages 556-569, XP058563225, DOI: 10.1109/ISCA45697.2020.00053, ISBN: 978-1-4503-8198-7.

### Summary of Invention

### Technical Problem

In a quantum computer using superconducting qubits, it is necessary to connect a qubit substrate placed inside a refrigerator such as a dilution refrigerator, cryostat, with a control and observation device placed in a room temperature environment via a cable. More than one wire per qubit is conventionally required because it is desirable to control all qubits independently. Cables used for such wiring are radio coaxial wires or microwave coaxial wires, which have dimensions on the order of millimeters. This is larger than wiring used in today's integrated circuits, and thus poses a challenge in terms of integration.

A general purpose of the disclosure is to reduce the number of wires in a device using qubits and to achieve robust control against variations in circuit parameters even when the number of wires is reduced.

### Solution to Problem

The present invention is defined in the independent claims. Preferred embodiments are defined by the dependent claims. Further aspects and examples are provided for facilitating the understanding of the invention.

### Advantageous Effects of Invention

According to the present disclosure, the number of wires in a device using qubits can be reduced. Furthermore, robust control can be achieved against variance in circuit parameters even if the number of wires is reduced.

### Brief Description of Drawings

Fig. 1 is a schematic diagram of a conventional quantum computer;
Fig. 2 is a functional block diagram of a quantum computation controller according to the first embodiment;
Fig. 3 is a schematic diagram of a unit cell of qubits arranged on a qubit substrate;
Fig. 4 is a schematic diagram of qubits grouped and arranged on a qubit substrate;
Fig. 5 is a schematic diagram showing how the syndrome extraction operation and the quantum logic gate operation are performed;
Fig. 6 is a detailed diagram of control signal generator, a qubit substrate, and a control circuit of the quantum computation controller of Fig. 2;
Fig. 7 is a detailed diagram of a control switch of the quantum computation controller of Fig. 2;
Fig. 8 is a diagram showing control switches related to the syndrome extraction operation;
Fig. 9 shows control switches related to the syndrome extraction operation and the subsequent quantum logic gate operation;
Fig. 10 is a detailed diagram of a qubit substrate and a control circuit of according to the second embodiment;
Fig. 11 is a flowchart of a quantum computation control method according to the fourth embodiment;
Fig. 12 is a functional block diagram of a quantum computation controller according to a variant; and
Fig. 13 is a schematic diagram of qubits arranged in a square lattice.

### Description of Embodiments

The invention will be described below with reference to the drawings based on suitable embodiments. The embodiments are examples rather than limitations of the invention. All features or combinations of features described in the embodiments are not necessarily essential to the invention. Identical or equivalent components, parts, and processes shown in each drawing shall be given the same symbol, and redundant explanations will be omitted where appropriate. The scale and shape of each part shown in each drawing are set for convenience in order to facilitate explanation, and are not to be construed as limiting unless otherwise noted. When terms such as "first," "second," etc. are used in this specification or in the claims, unless otherwise mentioned, these terms do not indicate any order or degree of importance, but are intended only to distinguish one configuration from another. In addition, in each drawing, some parts of the components that are not important in explaining the form of the product are omitted.

Before describing specific embodiments, basic finding will be described herein. In a quantum computer using superconducting qubits, hereinafter referred to as a "superconducting quantum computer", the qubits and related electronic circuits are placed inside a refrigerator. The inside of the refrigerator is kept at a low temperature of from several 10 mK (millikelvin) to several K (Kelvin). In particular, superconducting qubits are placed at cryogenic temperatures of about 10mK. In order to perform calculations using a superconducting quantum computer, it is necessary to perform syndrome extraction operations and quantum logic gate operations for quantum error correction process on the qubits. These operations are performed by a control unit or PC placed outside the refrigerator. The outside of such a refrigerator is usually in a room temperature environment. The observation signals output from the qubits are also observed by a measurement device placed in a room temperature environment outside the refrigerator. Conventionally, these operations and observations have been performed mainly by software. Therefore, it is necessary to connect electronic circuits in the refrigerator to devices in the ambient temperature environment with many cables. For example, 2 x N cables are typically required to control and observe each qubit individually if the total number of qubits is N. Cables used for such wiring are radio or microwave coaxial cables, which have dimensions of a few millimeters. This is larger than wires used in current integrated circuits and poses a major challenge for integration. Therefore, for the integration of a superconducting quantum computer, it is important to reduce the number of wires connecting the refrigerator to the room temperature environment.

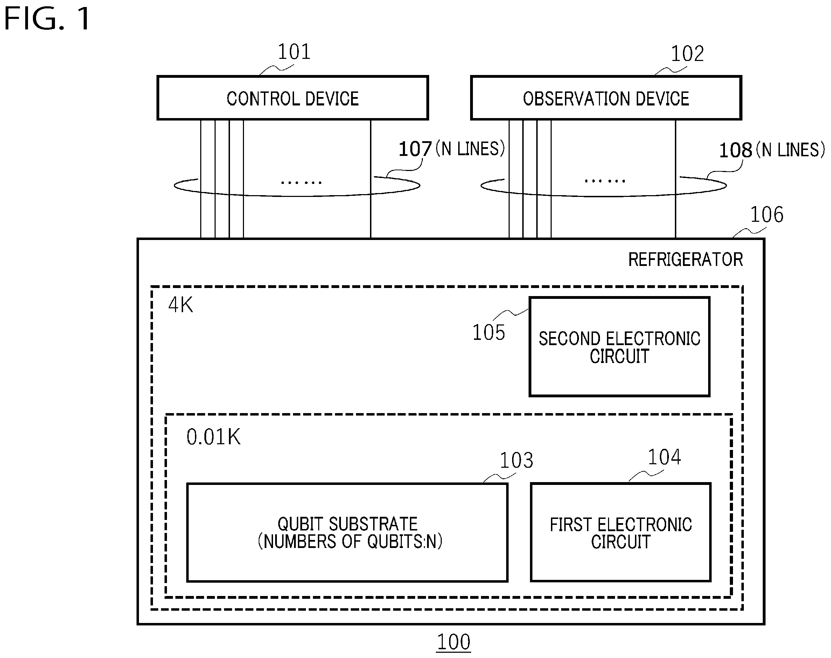

Figure 1 schematically shows the structure of a conventional quantum computer 100. The quantum computer 100 has a control device 101, an observation device 102, a qubit substrate 103 on which qubits are arranged, a first electronic circuit 104 and a second electronic circuit 105. The control device 101 and the observation device 102 are placed in a room temperature environment. The qubit substrate 103 and the first electronic circuit 104 are placed in a cryogenic environment of about 0.01 K in a refrigerator 106. The second electronic circuit 105 is placed in a cryogenic environment of about 4K in the refrigerator 106. The control device 101 and the refrigerator 106 are connected by a control line 107. The observation device 102 and the refrigerator 106 are connected by an observation line 108. The number of qubits arranged on the qubit substrate 103 is N. N is required to be about 10⁸ for practical use. Therefore, N control lines 107 and observation lines 108 are needed to independently control and observe all the qubits on the qubit substrate 103, respectively. In that case, the total number of these lines is as large as 2 x 10⁸. As mentioned above, the current system, which requires such a large number of wires, makes it difficult to integrate the device due to space and cooling capacity limitations inside the refrigerator.

In general, many quantum computers use quantum error correction using surface codes, hereinafter also referred to simply as "codes", as a method to protect information from noise. In this technique, a logical single qubit is redundantly encoded using multiple physical qubits. Hereafter, "physical qubits" are simply abbreviated as "qubits". These physical qubits are arranged in a lattice on a two-dimensional plane. By increasing the size of the lattice, i.e. by increasing the number of physical qubits, the redundancy of the code can be increased and the error tolerance can be increased.

The operations of qubits in a quantum computer described herein can be classified into "syndrome extraction operation" and "quantum logic gate operation.

As described below, the syndrome extraction operation, an operation to read out syndrome bits at high speed for quantum error correction, is an operation with translational symmetry in two-dimensional space. That is, the same control operation is applied to multiple groups consisting of multiple qubits with the same positional relationship between each qubit in the syndrome extraction operation. Using this property, control signals for the syndrome extraction operation which are generated by the control signal generator can be branched by the control circuit and sent to each qubit group. That is, the syndrome extraction operation is a spatially uniform operation. Furthermore, the syndrome extraction operation is performed periodically in time.

In contrast, the quantum logic gate operation for qubits has no spatial translational symmetry. Therefore, the control signals for the quantum logic gate operations are sent only to the specific qubit to be controlled. That is, quantum logic gate operations are spatially non-uniform. Quantum logic gate operations are performed during a periodically repeated syndrome extraction operation.

During the operation of a quantum computer, quantum logic gate operations are performed less frequently than syndrome extraction operations are performed. Typically, logical quantum operation can be performed using logical qubits after error correction where the code distance of the logical qubit formed by a physical qubit is d and the ratio of the frequency of the syndrome extraction operation to the frequency of the quantum logic gate operation is more than d.

### [The first embodiment]

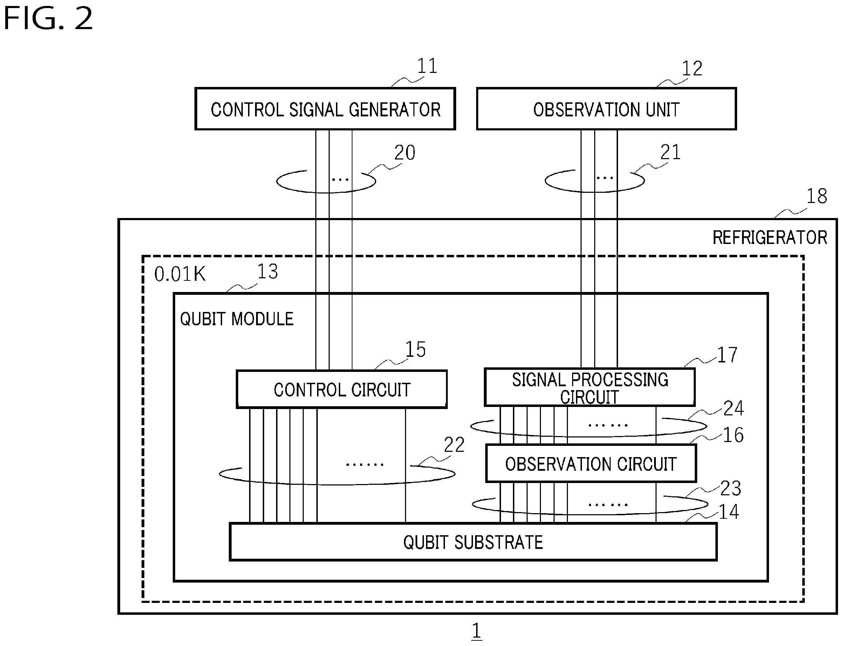

Figure 2 shows a functional block diagram of the quantum computation controller 1 according to the first embodiment. The quantum computation controller 1 comprises a control signal generator 11, an observation unit 12, and a qubit module 13. The qubit module 13 comprises a qubit substrate 14 on which a plurality of qubits are arranged, a control circuit 15, an observation circuit 16, and a signal processing circuit 17. The control signal generator 11 and the control circuit 15 are connected by control lines 20. The observation unit 12 and the signal processing circuit 17 are connected by observation lines 21. The qubit substrate 14 and the control circuit 15 are connected by first internal wires 22. The qubit substrate 14 and the observation circuit 16 are connected by second internal wires 23. The observation circuit 16 and the signal processing circuit 17 are connected by third observation wires 24.

The control signal generator 11 generates control signals for performing operations for the qubits on the qubit substrate 14 and instruction signals for causing the control circuit 15 to perform control of such operations. These control signals and instruction signals are described in detail later.

The observation unit 12 receives observation signals indicating the state of each qubit.

The qubit substrate 14 is comprises a plurality of qubits. These qubits are grouped into a plurality of groups consisting of a plurality of qubits having the same positional relationship between each qubit and are arranged on the qubit substrate 14. This grouping is described in detail later.

The control circuit 15 branches control signals into the above groups and controls the sending of control signals to each qubit to the qubit substrate 14 according to the instruction signals generated by the control signal generator 11.

The observation circuit 16 observes the state of each qubit that has undergone the aforementioned operations.

Signal processing circuit 17 sends the observation signal of each qubit to observation unit 12.

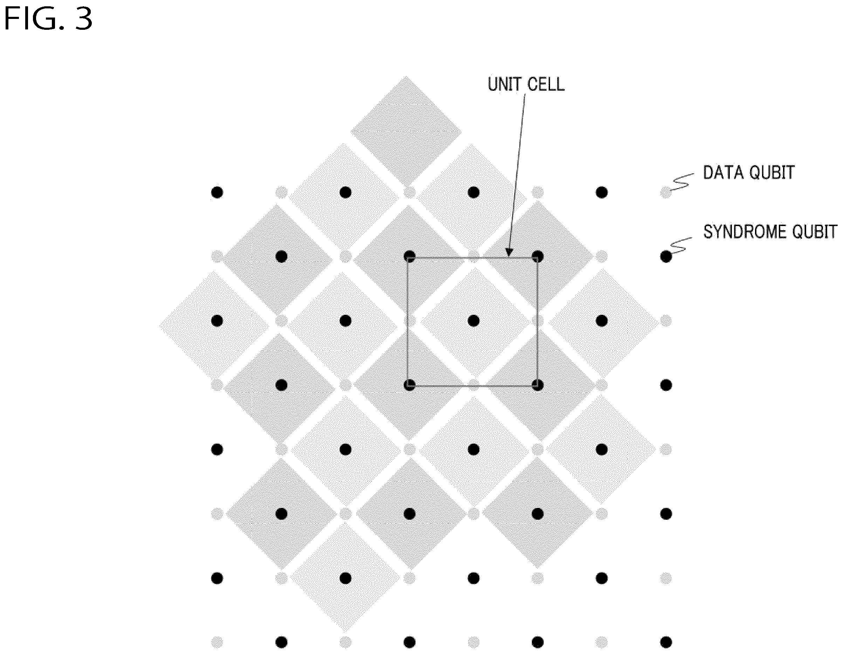

Figure 3 schematically shows qubits arranged on the qubit substrate 14. Each qubit is regularly arranged in two-dimensional space. Specifically, this arrangement has a structure in which a rectangular configuration, hereinafter referred to as a "unit cell", is repeated in the two-dimensional direction. A single qubit is arranged on each vertex, edge and inside of unit cells. A unit cell has 4 qubits since there are 1/4 qubit on each vertex and 1/2 qubit on each edge. Therefore, qubits are arranged to have translational symmetry on the qubit substrate 14. Among the qubits arranged on the qubit substrate 14, the qubits located on the edges of the unit cell are used to construct a code and are called data qubits. On the other hand, the qubits located on the vertices and in the unit cell are used as auxiliary qubits to observe the quantum state of the data qubits by cross-resonance gate operation and are called syndrome qubits. These qubits may be fixed-frequency transmon qubits. Each qubit may have a unique resonance frequency.

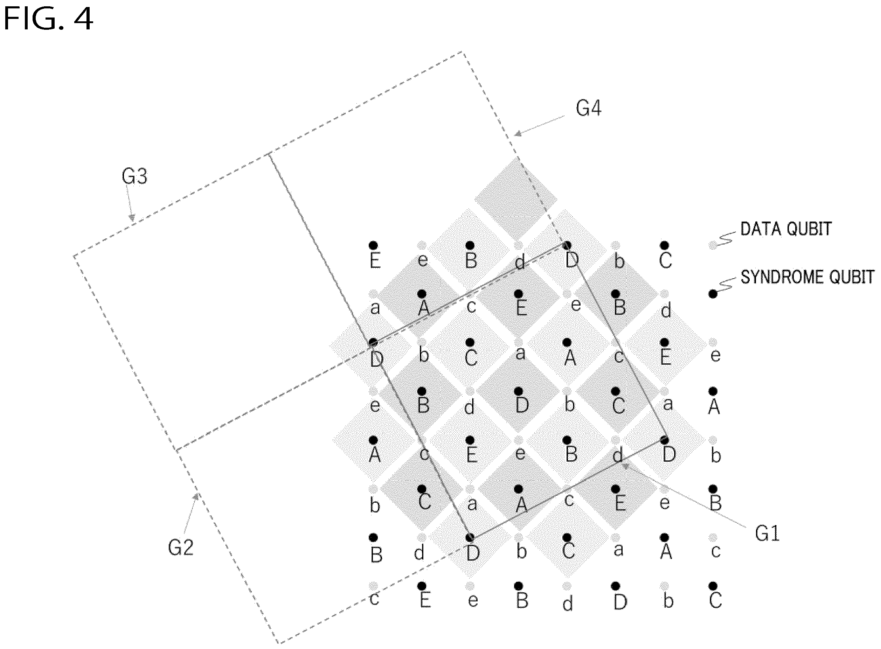

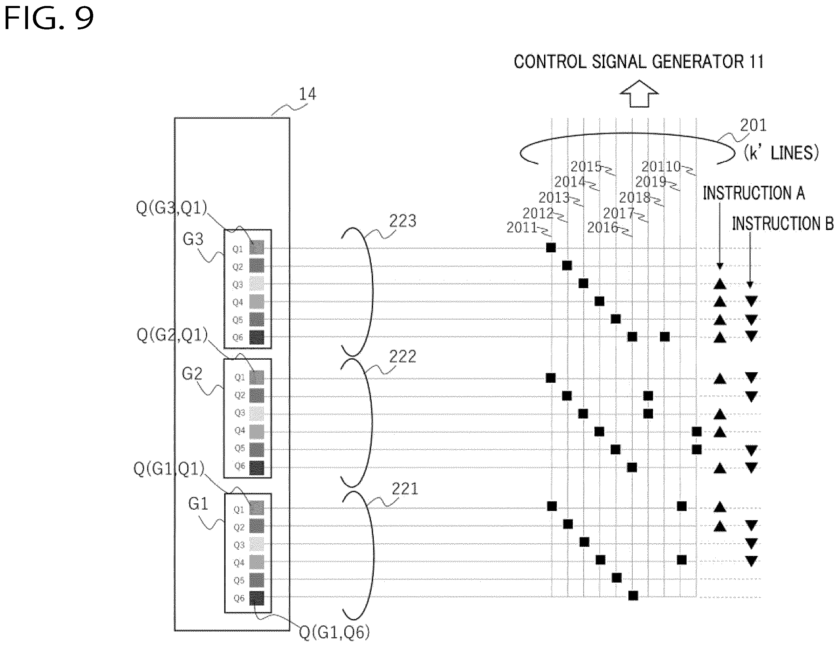

Hereafter, we consider the case where the qubits are transmon-type qubits and a cross-resonance gate is adopted as a two-qubit gate. Also, we consider the case where 10 different frequency relationships between qubits are assigned, such as the syndrome qubits of a-e and the data qubits of a-e in Figure 4. In this case, we define a square lattice G1 as shown in Figure 9. The lattice G1 spans multiple unit cells, however it has translational symmetry with 20 qubits as the unit due to the role determined by the code and the extraction operation.

The lattice G1 with translational symmetry in Figure 4 is used to group the qubits with the qubits placed on the qubit substrate 14. In Figure 4, lattices G1, G2, G3 and G4 are explicitly shown as representatives of such lattices. Obviously, lattices G1, G2, G3 and G4 have the same qubit arrangement. Hereafter, it is assumed that the entire qubits on the qubit substrate 14 are grouped in P lattices, G1, G2, G3, G4, ..., GP in total. Furthermore, the number of qubits in each lattice is denoted by k below. As shown in lattice G1, k = 20 in this example. Obviously, lattices G1, G2, G3, G4, ..., GP all have geometrically the same qubit arrangement. Therefore, the qubits on the qubit substrate 14 are grouped and arranged in groups consisting of a plurality of qubits that have the same positional relationship between each qubit. That is, these qubits are repeatedly arranged on the qubit substrate 14 in a tiled configuration, lattice G1, G2, G3, G4, ... in this example, in the two-dimensional spatial direction. Hereafter, the above lattices are also referred to as "groups."

In quantum error correction using surface codes, these codes have translational symmetry. Therefore, the syndrome extraction operation for quantum error correction can be commonly performed on all lattices. For example, to perform the syndrome extraction operation independently on the qubits in the lattice G1, a control line is connected to each of the k qubits, k = 20 in this example, that make up the lattice G1, and a control signal for the syndrome extraction operation is transmitted. At this time, the same control signals can be used for the lattices G2, G3, G4, ..., GP as for the lattice G1 to perform the syndrome extraction operation. The control signals sent from the control circuit 15 to the qubit substrate 14 are periodically and repeatedly sent out in units of the lattice, i.e. group, to be controlled. That is, the syndrome extraction operation is performed periodically in time.

As long as the circuit making up the qubits is sufficiently uniform and the control waveform is robust enough to absorb variance in its circuit parameters, the syndrome extraction operation can be commonly performed on all lattices.

In this case, the number of wires can be reduced by making the control lines 20, which connect the control signal generator 11 and the control circuit 15, common among each lattice, i.e. group, and then branching the control lines 20 to each lattice, i.e. group, by the control circuit 15. For example, the number of lattices, groups, is N/k if the total number of qubits on the qubit substrate 14 is N. As explained above, the number of the control lines 20 may be the number of qubits in the lattice, group, since the syndrome extraction operation can be commonly performed on all lattices. Therefore, the number of control lines, which conventionally required a total number of qubits in the order of N, can be reduced by k/N times. In this example, the number of control lines 20 can be reduced by 20/N times because k = 20. Thus, for the syndrome extraction operation, the control lines for the syndrome extraction operation can be shared by utilizing the symmetry of the codes and the grouping of the qubits. Hereafter, operations with spatial translational symmetry such as the syndrome extraction operation, or more generally operations that are spatially uniform, are referred to as "first operations."

On the other hand, a quantum logic gate operation is performed by operating a particular qubit to be operated during a syndrome extraction operation which is repeated periodically. That is, a quantum logic gate operation has neither spatial translational symmetry nor temporal periodicity. Therefore, unlike the syndrome extraction operation, the quantum logic gate operation cannot be commonly performed on the aforementioned lattice, group. That is, the control signal for the quantum logic gate operation must be sent only to the specific qubits to be controlled. For this reason, it is not possible to perform quantum logic gate operations simply by making the control lines 20 common and branching them to each lattice, group. Hereafter, operations that do not have translational symmetry, or more generally operations that are spatially non-uniform, such as the quantum logic gate operation, are referred to as "second operations.

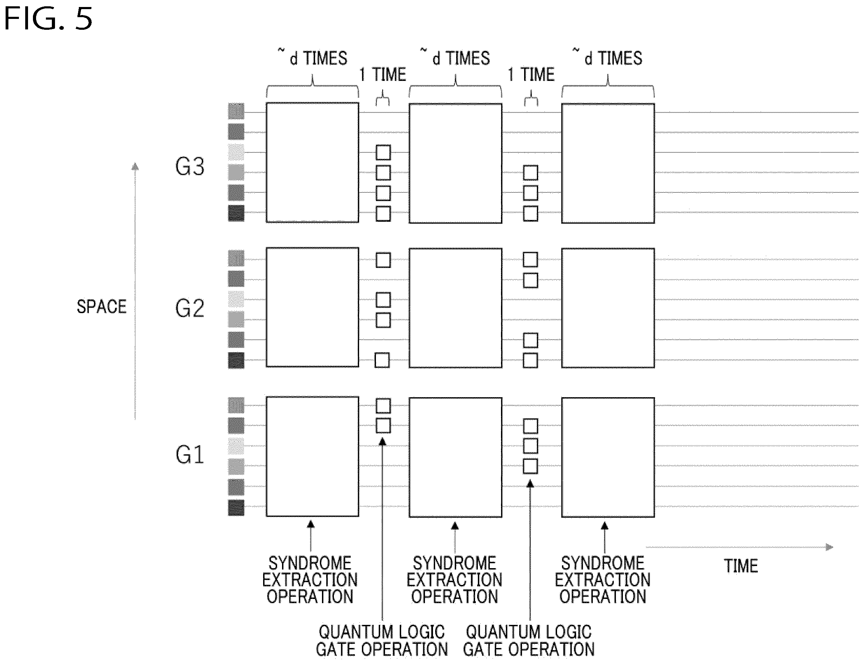

The number of syndrome extraction operations, quantum error correction, required for a single quantum logic gate operation is determined by the code distance d > 1 of the qubit. Typically, required number of syndrome extraction operations is more than or equal to d. Therefore, in this case, the ratio of the frequency of the syndrome extraction operation to the frequency of the quantum logic gate operation, and thus the ratio of the execution time of the syndrome extraction operation to the execution time of the quantum logic gate operation, is more than or equal to d. Figure 5 shows schematically how the s quantum logic gate operation are performed. Here, lattices G1, G2, and G3 are shown as representative, and each lattice is assumed to contain six qubits. Note that the boxes labeled "syndrome extraction operation" in Figure 5 refer to the same process. Figure 5 shows that syndrome extraction operation is performed periodically in time.

The arrangement of the qubits on the lattice described above is an example and is not a limitation.

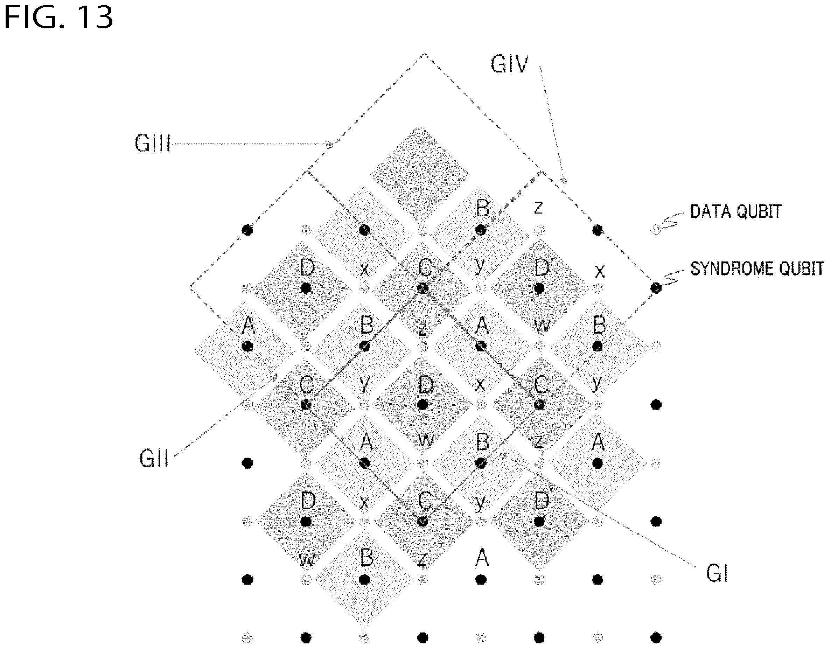

Figure 13 schematically shows qubits arranged on lattices GI, GII, GIII, and GIV, which are different from those in Figure 4. Here, four types of syndrome qubits A-D and four types of data qubits x-w, i.e. eight types of qubits in total, are assigned. In this example, k = 8 as shown in the lattice GI. As mentioned above, the number of control lines can be reduced by k/N times, which previously required N orders of qubits in total. In this example, the number of control lines is reduced by 8/N times because k=8. Obviously, the second operation described above can be performed in the same way even in the case of k=8.

Surface codes, one of the error correcting codes with translational symmetry, require only proximity interaction. That is, no interaction between remote qubits is required. For example, for qubits densely arranged in a two-dimensional lattice, it is sufficient that a two-qubit gate can be performed only between neighboring qubits.

As explained above, qubits are classified into two types of qubits with different roles by quantum error correction codes. One is referred to as data qubit, which is used to preserve a quantum state. The other is referred to as syndrome qubit, which is used to detect the parity value of a data qubit. Data qubits and syndrome qubits are arranged alternately on a square lattice. That is, qubits neighboring a data qubit on the top, bottom, left and right are syndrome qubits, and vice versa.

Unlike classical error-correcting codes, quantum error-correcting codes are not allowed to directly observe the value of a data qubit, but are allowed to obtain a parity value. In order to observe the state of a data qubit and obtain a parity value without breaking the state, it is necessary to perform a two-qubit gate operation between the data qubit and the syndrome qubit. In the case of a square lattice, the parity value is aggregated to the syndrome qubit by performing two-qubit gates operation four times for one data qubit. Quantum entanglement is used in this process. The parity value of the data qubits can be obtained by measuring only the syndrome qubits.

In the example arrangement shown in Figure 13, four types of syndrome qubits A, B, C, D and four types of data qubits w, x, y, z, i.e. a total of eight different frequency qubits, are assigned. As shown in Figure 13, the two-dimensional plane is filled with squares hatched in two different shades of gray, with one data qubit at the top. A syndrome qubit is placed at the center of the square. This square indicates the area where each syndrome qubit obtains the parity value. This means that the syndrome qubits A-D obtain the parity value of the data qubits w-z. Parity value herein is the value that indicates whether the number of the same bit value, which value is 0 or 1, in data qubits w-z is even, wxyz = 0000, 0011, 0101, 0110, 1001,..., etc., or odd, wxyz = 0001, 0010, 0100, 0111,..., etc. This parity value is obtained by calculating the sum of the bit values, 0 in mod 2 for even numbers and 1 in mod 2 for odd numbers, using a two-qubit gate and observing the syndrome qubits.

It should be noted that squares in Figure 13 are color-coded in two different shades of gray. To maintain the quantum mechanical state, it is necessary to obtain parity values for phase flip as well as for bit flip. The parity value for phase flip is the parity value indicating whether the number of the same value is even, wxyz = ++++, ++--, +-+-,...,etc., or odd when the qubit value is projected onto the x-axis of the Bloch sphere. Quantum error correction constructs a parity check matrix from the parity values obtained by the syndrome qubits for bit flip and corrects bit flip errors through the decoding process. Quantum error correction also constructs a parity check matrix from the parity values obtained by the syndrome qubits for phase flip and corrects phase flip errors through the decoding process. To obtain the parity values for these two different roles, the square lattice is filled with squares of two different shades of gray, i.e. the area where each syndrome qubit obtains the parity value.

As explained above, the qubits are classified into
(1) data qubits and
(2) Syndrome qubits.
Data qubits and syndrome qubits are arranged alternately in a square lattice. Syndrome qubits are classified into
(2-A) Syndrome qubits that obtain parity values for bit flip and
(2-B) Syndrome qubits that obtain parity values for phase flip.

The inventors have found that both the first and second operations can be performed using the configuration with the common control line 20 described above by controlling the sending of control signals to the qubits arranged on the qubit substrate 14. For example, by controlling the sending of control signals such that in the first operation, control signals are sent out to all qubits on the qubit substrate 14, and in the second operation, control signals are sent out only to specific qubits to be controlled on the qubit substrate 14.

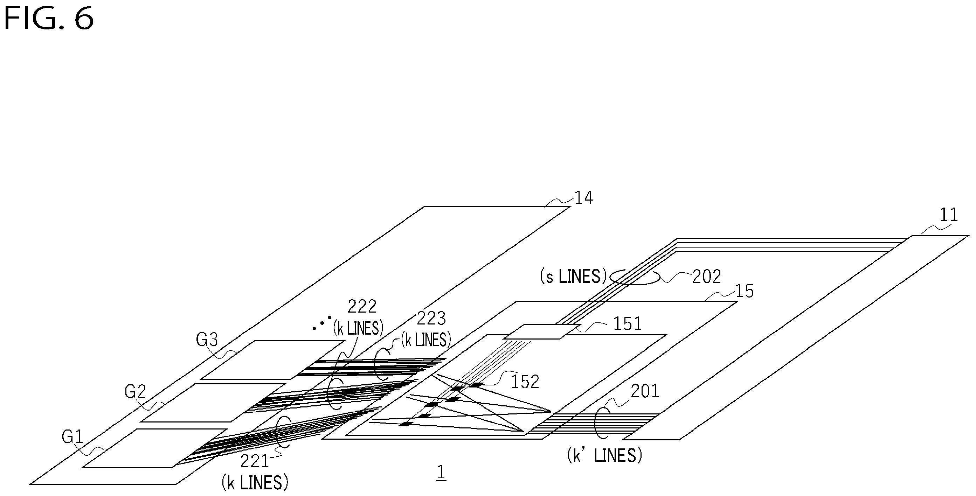

Figure 6 shows details of the control signal generator 11, the qubit substrate 14, and the control circuit 15 of the quantum computation controller 1. The control circuit 15 comprises an instruction decoder 151 and up to N x k' control switches 152. N is the total number of qubits on the qubit substrate 14 and k' is the number of control signal lines described below. The control line 20 connecting the control signal generator 11 and the control circuit 15 has k' control signal lines 201 and s instruction signal lines 202 where k < k' < < N. The control circuit 15 is connected to the lattice G1, G2, G3, G4, ..., GP by k qubit control lines 221, 222, 223, respectively.

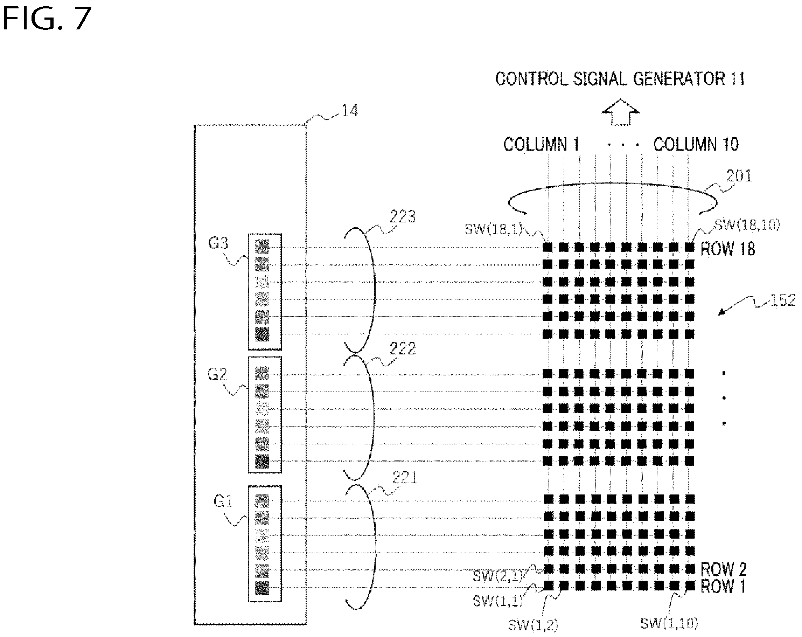

Figure 7 shows details of the control switch 152 of the control circuit 15 of the quantum computation controller 1. Here, the number of lattices is 3, which lattices are represented by G1, G2 and G3, the number of qubits k in each lattice is 6, the number of each qubit control line 221, 222, 223 is 6, i.e. equal to k, the total number of qubits N on qubit substrate 14 is 18, i.e. k x (the number of lattices), the number of control signal lines k' is 10, and the number of control switches 152 is 180, i.e. N x k'. The control switches 152 are arranged in a matrix. Each row, horizontal line, of this matrix corresponds to a qubit control line 221, 222, 223. Each column, vertical line, corresponds to a control signal line 201. Here, the rows of this matrix are, from the bottom, row 1, row 2, ..., and row 18. Also, the columns of this matrix are, from left to right, rows 1, 2, ..., and 10. Each control switch 152 is represented as SW(1, 1), SW(1, 2), ..., SW(1, 10), SW(2, 1), ..., SW(18, 1), ..., SW(18, 10) using the components of this matrix. It should be noted that in Figure 6, the control signal lines 201 are drawn horizontally, while in Figure 7 they are drawn vertically. The outputs of the control switches leading to the same qubit shown in a horizontal row are commonalized into one line by a multiplexer and the like and connected to the qubit. To facilitate the explanation, the instruction signal line 202 and the instruction decoder 151 are omitted from the figure.

Each control switch 152 is composed of one input, one output, and one switch control line which is omitted from the figure. The control switch 152 operates to output or not output the control signal input to the input line to the output line according to the enable signal input to the switch control line, i.e. it operates on/off.

Control signals generated by the control signal generator 11 input to the control circuit 15 through k' control signal lines 201. Each control signal inputted to control circuit 15 is P-branched for lattice G1, G2, G3, ..., GP and inputs to control switch 152, respectively.

On the other hand, instruction signals generated by the control signal generator 11 input to the instruction decoder 151 through the instruction signal line 202. The instruction decoder 151 decodes the instruction signals and sends the turn on timing and the turn off timing of the output to each control switch 152 through the switch control lines. The total number of switch control lines is N x k'. It is possible to establish up to 2^{s} types of instructions by decoding since there are s signal lines.

In the first operation, i.e. the syndrome extraction operation, the control switch 152 is controlled such that the control signal for performing the first operation generated by the control signal generator 11 is sent out at the same timing to each corresponding quantum bit among all lattices G1, G2, G3, ..., GP on the qubit substrate 14.

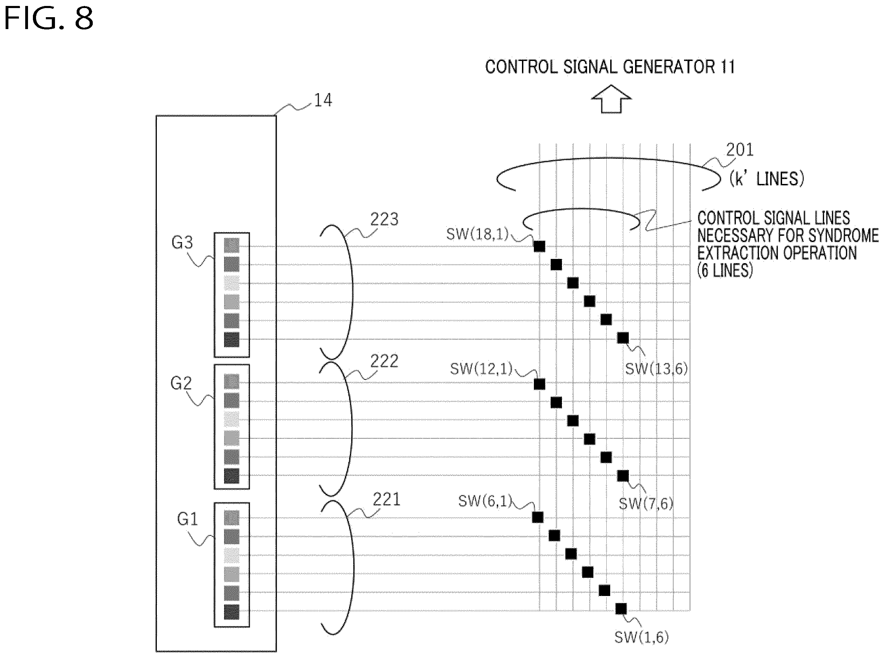

Figure 8 shows the control switches for the syndrome extraction operation. As illustrated, the control switches used for the syndrome extraction operation are SW (1, 6), SW (2, 5), SW (3, 4), SW (4, 3), SW (5, 2), SW (6, 1), SW (7, 6), SW (8, 5), SW (9, 4), SW (10, 3), SW (11, 2), SW (12, 1) SW (13, 6), SW (14, 5), SW (15, 4), SW (16, 3), SW (17, 2) and SW (18, 1). These control switches correspond to the diagonal components of the submatrix corresponding to each lattice. These 18 control switches are cyclically turned on and off in the syndrome the extraction operation. In this case, only 6 of the k' = 10 control signal lines 201 are used.

On the other hand, in the second operation, i.e. quantum logic gate operation, the instruction signal turns on only a specific switch for the qubit to be controlled out of the N x k' control switches 152. As a result, the control signal generated by the control signal generator 11 to perform the second operation is sent out only to the specific controlled target qubits on the qubit substrate 14.

Figure 9 shows only the necessary control switches for the first operation and the subsequent second operation. The qubits in each lattice G1, G2, G3 are indicated by Q1, Q2, ..., Q6 from the top. Hereafter, each qubit on the qubit substrate 14 is denoted by Q(G1, Q1), Q(G1, Q2), ..., Q(G1, Q6), Q(G2, Q1), ..., Q(G2, Q6), Q(G3, Q1), ..., Q(G3, Q6) using the numbers G1, G2, G3 of the lattice and the numbers Q1, Q2, ..., Q6 of the qubits in each lattice. Control signal line 201 includes 10 control signal lines 2011, 2012, 2013, 2014, 2015, 2016, 2017, 2018, 2019, and 20110. We assume that there are two types of instructions for the quantum logic gate operation, i.e. instruction A and instruction B. Instructions A and instructions B are indicated by upward triangles and downward triangles, respectively. Instructions A and B simultaneously and independently instruct 10 qubits of a specific control target to perform respective quantum logic gate operation.

Instruction A controls Q(G1, Q1), Q(G1, Q2), Q(G2, Q1), Q(G2, Q3), Q(G2, Q4), Q(G2, Q6), Q(G3, Q3), Q(G3, Q4), Q(G3, Q5) and Q(G3, Q6). Instruction B controls Q(G1, Q2), Q(G1, Q3), Q(G1, Q4), Q(G2, Q1), Q(G2, Q2), Q(G2, Q5), Q(G2, Q6), Q(G3, Q4), Q(G3, Q5) and Q(G3, Q6).

The following is a description of the control signals carried by each of the 10 control signal lines 2011-20110 forming control signal line 201.
Control signal line 2011 carries control signals for the syndrome extraction operation, instruction A for Q (G2, Q1) and instruction B for Q (G2, Q1).
Control signal line 2012 carries control signals for the syndrome extraction operation, instruction A for Q (G1, Q2) and instruction B for Q (G1, Q2).
Control signal line 2013 carries control signals for the syndrome extraction operation, instruction A for Q (G3, Q3) and instruction B for Q (G1, Q3).
Control signal line 2014 carries control signals for the syndrome extraction operation, instruction A for Q (G3, Q4) and instruction B for Q (G3, Q4).
Control signal line 2015 carries control signals for the syndrome extraction operation, instruction A for Q (G3, Q5) and instruction B for Q (G3, Q5).
Control signal line 2016 carries control signals for the syndrome extraction operation, instruction A for Q (G2, Q6) and instruction B for Q (G2, Q6).
Control signal line 2017 carries control signals for instruction A for Q (G2, Q3) and instruction B for Q (G2, Q2).
Control signal line 2018 carries control signals for instruction A for Q (G3, Q6) and instruction B for Q (G3, Q6).
Control signal line 2019 carries control signals for instruction A for Q (G1, Q1) and instruction B for Q (G1, Q4).
Control signal line 20110 carries control signals for instruction A for Q (G2, Q4) and instruction B for Q (G2, Q5).

The switching operations of SW (1, 1) - SW (18, 10) is described below.
SW (1, 6), SW (2, 5), SW (3, 4), SW (4, 3), SW (5, 2), SW (6, 1), SW (7, 6), SW (8, 5), SW (9, 4), SW (10, 3), SW (11, 2), SW (12, 1), SW (13, 6), SW (14, 5), SW (15, 4), SW (16, 3), SW (17, 2) and SW (18, 1) are turned on when performing the syndrome extraction operation.

The switching behavior when performing the quantum logic gate operation of instruction A is as follows.
SW (6, 9) is turned on when performing the quantum logic gate operation of instruction A on Q (G1, Q1).
SW (5, 2) is turned on when performing the quantum logic gate operation of instruction A on Q (G1, Q2),.
SW (12, 1) is turned on when performing the quantum logic gate operation of instruction A on Q(G2, Q1).
SW (10, 3) is turned on when performing the quantum logic gate operation of instruction A on Q(G2, Q3).
SW (9, 4) is turned on when performing the quantum logic gate operation of instruction A on Q(G2, Q4).
SW (7, 6) is turned on when performing the quantum logic gate operation of instruction A on Q (G2, Q6).
SW (16, 3) is turned on when performing the quantum logic gate operation of instruction A on Q (G3, Q3).
SW (15, 4) is turned on when performing the quantum logic gate operation of instruction A on Q (G3, Q4).
SW (14, 5) is turned on when performing the quantum logic gate operation of instruction A on Q (G3, Q5).
SW (13, 8) is turned on when performing the quantum logic gate operation of instruction A on Q (G3, Q6).

The switching operation when performing the quantum logic gate operation of instruction B is as follows.
SW (5, 2) is turned on when performing the quantum logic gate operation of instruction B on Q (G1, Q2).
SW (4, 3) is turned on when performing the quantum logic gate operation of instruction B on Q (G1, Q3).
SW (3, 9) is turned on when performing the quantum logic gate operation of instruction B on Q (G1, Q4).
SW (12, 1) is turned on when performing the quantum logic gate operation of instruction B on Q (G2, Q1).
SW (11, 7) is turned on when performing the quantum logic gate operation of instruction B on Q (G2, Q2).
SW (8, 10) is turned on when performing the quantum logic gate operation of instruction B on Q (G2, Q5).
SW (7, 6) is turned on when performing the quantum logic gate operation of instruction B on Q (G2, Q6).
SW (15, 4) is turned on when performing the quantum logic gate operation of instruction B on Q (G3, Q4).
SW (14, 5) is turned on when performing the quantum logic gate operation of instruction B on Q (G3, Q5).
SW (13, 8) is turned on when performing the quantum logic gate operation of instruction B on Q (G3, Q6).

In this example, control signal line 2011 and control signal line 2019 are used for the control of Q (G1, Q1). Control signal line 2016 is used for the syndrome extraction operation via SW (6, 1). Control signal line 2019 is used for quantum logic gate operation via SW (6, 9). Thus, with respect to Q(G1, Q1), multiple control lines are used for one qubit. The same is true with respect to Q(1, 4), Q(2, 2), Q(2, 3), Q(2, 4), Q(2, 5), Q(3, 6).

In contrast, with respect to Q(G1, Q2), Q(G1, Q3), Q(G1, Q5), Q(G1, Q6), Q(G2, Q1), Q(G2, Q6), Q(G3, Q1), Q(G3, Q2), Q(G3, Q3), Q(G3, Q4), Q(G3, Q5), one control line is used for one qubit.

The wiring and control switch arrangement described above is an example and is not a limitation.

As explained above, the control circuit 15 controls the sending of control signals such that, in the first operation, control signals are sent out to all the qubits on the qubit substrate 14 and, in the second operation, control signals are sent out only to a specific qubit to be controlled on the qubit substrate 14, based on the instruction signals.

The control circuit 15 may send a common control signal to each group of the qubit substrate 14 in the first operation and send individually respective control signal to each qubit on the qubit substrate 14 in the second operation, based on the instruction signals generated by the control signal generator 11. This allows the spatially uniform first operation to be performed in common for all groups, while the spatially non-uniform second operation, which is performed less frequently than the frequency of the first operation, can be performed only for specific qubits.

The above qubit module 13 comprising control circuit 15, observation circuit 16 and signal processing circuit 17 is preferably implemented using hardware. Thus, in this embodiment, the qubit module 13 can be placed in a refrigerator by offloading the quantum computation process, which is conventionally performed in software, to hardware.

As explained above, by applying k' control signal lines 201 and s instruction signal lines 202 to the control lines 20, the number of control lines 20 can be k' + s. As a result, the number of control lines, which conventionally required a total of N orders of qubits, can be reduced by (k' + s) / N times.

According to this embodiment, the number of wires connecting the control signal generator 11 and the qubit module 13, i.e. the number of control lines 20, can be k' + s where the number of qubits in each group is k and the number of signal lines transmitting instruction signals is s. Furthermore, frequency multiplexing can be performed in the control signal generator 11 to save wires if the control signals have different frequencies. Line saving can also be achieved by time division multiplexing if the control signals are digital signals. In such a case, the number of control lines 20 can be reduced to k' + s or less.

Signal processing circuit 17 may perform quantum error correction decoding process. Quantum error correction requires a very large number of fast readout. For example, one logical quantum bit error information consisting of 2000 physical qubits generates about 1 Gbps of information. This output signal is used only for the estimation process of the errors that occurred in the qubits. By executing the decoding process of quantum error correction (estimation process of error location) in the cryogenic environment inside a refrigerator, the signal bandwidth between the refrigerator and the room temperature environment can be reduced. For example, by using a signal processing circuit that uses a superconducting digital logic circuit, the circuit can be operated online. Therefore, the acquired signals do not need to be retained in the circuit and the information used to estimate the error location can be discarded. Thus, the signal bandwidth between the refrigerator and the room temperature environment is reduced, and the wirers connecting the refrigerator to the ambient temperature environment can be reduced. As a result, the number of observation lines, which previously required a total number of qubits in the order of N, can be reduced to only the observation lines for the data qubits after error correction. The number of observation lines can be further reduced by multiplexing.

The outline of the quantum error correction decoding process is as follows. Information on the error of the qubit is obtained when the first operation described above is performed once on a qubit. The error location is estimated for this error information, and the inverted information for the qubit value is stored in the signal processing circuit 17. On the other hand, some of the second operations described above involve obtaining information about the qubit, for example, parity value, logical qubit value, etc. The value obtained after executing the instructions for such operations is modified by the stored inverted information of the qubit value.

In the example of Fig. 2, the qubit module 13 is placed in a cryogenic environment of about 0.01 K in a refrigerator 18, while the control signal generator 11 and the observation unit 12 are placed in a room temperature environment. However, in various embodiments, this is not limited to this, and it is sufficient that at least the qubit module 13 is placed in a cryogenic environment within the refrigerator. For example, the control signal generator 11 and the observation unit 12 may be dispersedly placed in a room temperature environment to a cryogenic environment. In addition, not all of the configurations in the qubit module 13 in the refrigerator 18 need to be placed under cryogenic temperatures of about 0.01 K. For example, only the qubit substrate 14 of the qubit module 13 may be placed under a cryogenic temperature of about 0.01 K, while the control circuit 15, observation circuit 16, and signal processing circuit 17 may be placed under a relatively high temperature of several K or several 100 mK in the refrigerator 18.

This embodiment is effective when applied to a superconducting quantum computer. In this case, the qubits arranged on the qubit substrate are superconducting qubits.

The above embodiments were those in which the qubit module is placed in a low-temperature environment. Not limited to this, the qubits may be, for example, solid-state qubits. In this case, the qubit module may be in a room temperature environment. For such a qubit module, both the first and second operations described above can be performed using hardware comprising an instruction decoder and a control switch.

### [The second embodiment]

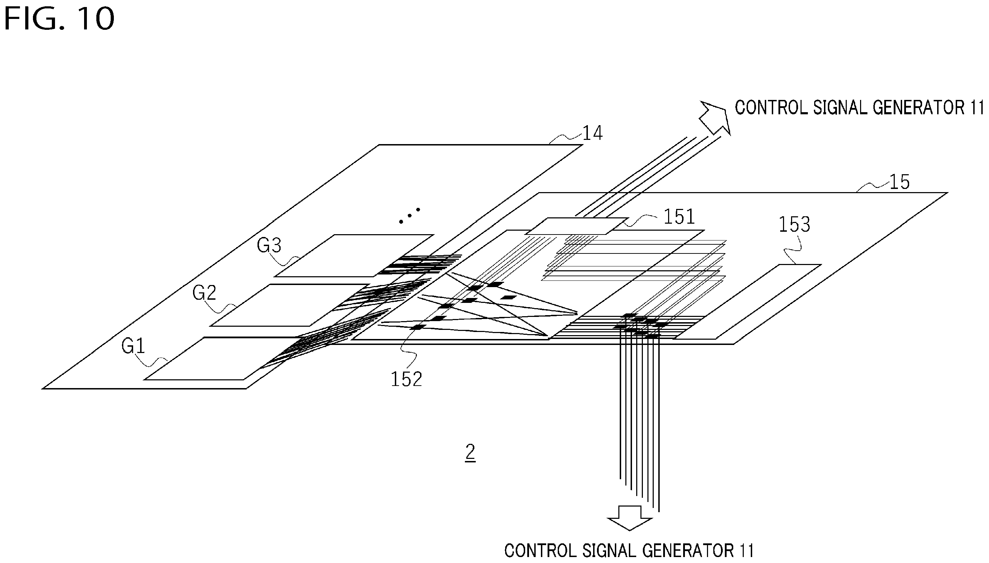

Figure 10 shows details of the qubit substrate 14 and control circuit 15 of the second embodiment of the quantum computation controller 2. Figure 10 corresponds to Figure 6. The quantum computation controller 2 further comprises a waveform memory 153 with respect to the quantum computation controller 1 of Fig. 6. The other components of the quantum computation controller 2 are the same as those of quantum computation controller 1.

The waveform memory 153 stores the waveforms of the control signals for performing the first operation generated by the control signal generator 11. The waveform memory 153 may store, for example, k types of signal waveforms for one cycle. The waveform memory 153 reads the stored signal waveforms and inputs them to the control switch 152 when the first operation is performed.

The control signal for performing the first operation does not always need to be generated in real time by the control signal generator 11, since the same signal is periodically repeated. Therefore, as in this embodiment, the waveform of the control signal generated may be stored in the waveform memory 153, read out periodically and used. The stored signal waveform may be rewritten with the new signal waveform when the control signal generator 11 generates a new signal waveform.

According to this embodiment, during operation, the only control signal input from the control signal generator 11 to the control circuit 15 is the control signal to perform the second operation, thus reducing the bandwidth of the signal transmitted through the control line 20.

### [The third embodiment]

The third embodiment is a quantum computer. This quantum computer comprises the quantum computation controller of the aforementioned embodiment. The basic configuration of the quantum computer may use conventional technology.

According to this embodiment, a quantum computer with a reduced number of wires can be realized.

### [The fourth embodiment]

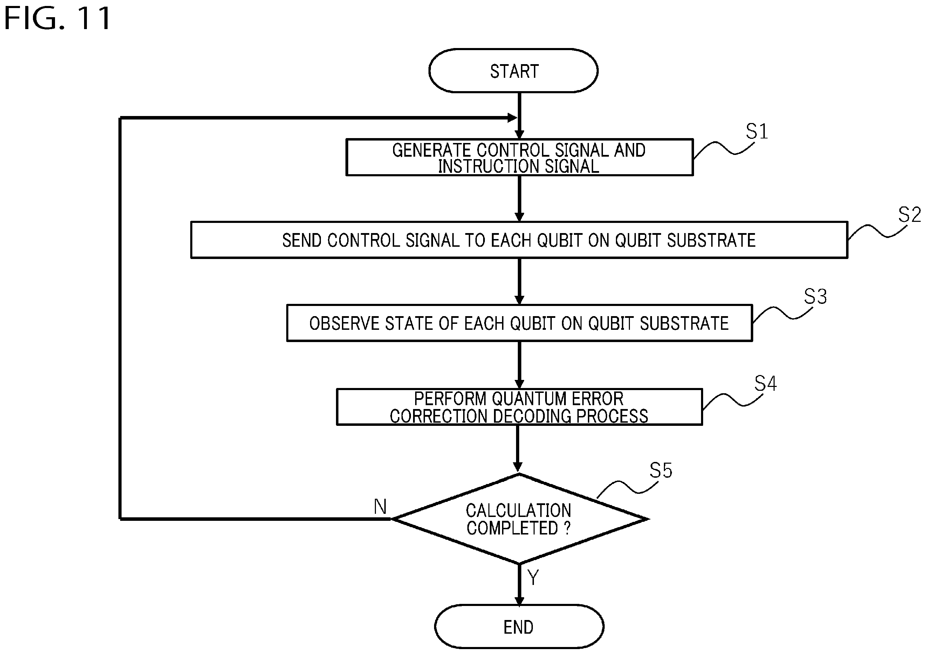

Figure 11 shows a flowchart of the quantum computation control method according to the fourth embodiment.

Step S1 generates a control signal for performing one or more types of spatially uniform first operation which is an operation for a qubit on the qubit substrate and for performing one or more types of spatially non-uniform second operation, which is an operation for a qubit on the qubit substrate, performed less frequently than the first operation and an instruction signal for causing the control circuit to perform control of the first and the second operations. Step S2 splits the control signal into groups of qubits and controls the sending of the control signal to each qubit on the qubit substrate according to the instruction signal, using the control circuit. Step S3 observes the state of each qubit that has undergone the first or second operation using the observation circuit. Step S4 performs quantum error correction decoding process using the signal processing circuit. Step S5 determines whether the calculation using the qubit has been completed. The process returns to step S1 if the judgment result is negative. The process ends if the judgment result is positive. The qubits on the qubit substrate are grouped and arranged in a plurality of groups consisting of a plurality of qubits having the same positional relationship between each qubit.

According to this embodiment, the number of wires in a device using qubits can be reduced.

The present disclosure has been described based on the embodiments above.

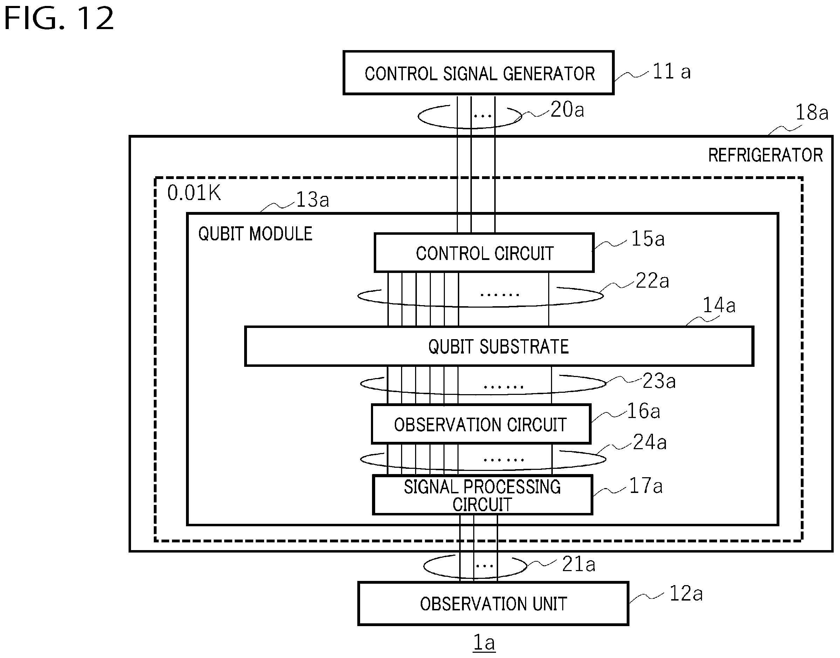

Figure 12 shows a functional block diagram of the quantum computation controller 1a according to a variant. The quantum computation controller 1a comprises a control signal generator 11a, an observation unit 12a, and a qubit module 13a. The qubit module 13a comprises a qubit substrate 14a, on which a plurality of qubits arranged, a control circuit 15a, an observation circuit 16a, and a signal processing circuit 17a. The control signal generator 11a and the control circuit 15a are connected by control lines 20a. The observation unit 12a and the signal processing circuit 17a are connected by observation lines 21a. The qubit substrate 14a and the control circuit 15a are connected by first internal wires 22a. The qubit substrate 14a and the observation circuit 16a are connected by second internal wires 23a. The observation circuit 16a and the signal processing circuit 17a are connected by third observation lines 24a.

In the quantum computation controller 1 of Fig. 2, the control signal generator 11 - control circuit 15 - qubit substrate 14 and the observation unit 12 - signal processing circuit 17 - observation circuit 16 - qubit substrate 14 are configured in parallel. This is a "reflective type" configuration in the form that the observation signals are reflected back from the refrigerator 18 when the control and command signals input from the control signal generator 11 to the refrigerator 18.

In contrast, in the quantum computation controller 1a, the control signal generator 11a - control circuit 15a - qubit substrate 14a - observation circuit 16a - signal processing circuit 17a - observation unit 12a are configured in series. This is a "transmission type" configuration in the form that signals are transmitted through the refrigerator 18 and then the observation signals output when control and command signals input from the control signal generator 11a to the refrigerator 18.

### Industrial Applicability

The present disclosure can be used for quantum computation controllers, quantum computers, and quantum computation control methods.

This application claims priority based on U.S. Provisional Patent Application No. 63180500.

### Reference Signs List

1 Quantum computation controller,
2 Quantum computation controller,
1A Quantum computation controller,
11 Control signal generator,
11a Control signal generator,
12 Observation unit,
12a Observation unit,
13 Qubit module,
13A Qubit module,
14 Qubit substrate,
14A Qubit substrate,
15 Control circuit,
15A Control circuit,
16 Observation circuit,
16A Observation circuit,
17 Signal processing circuit,
17a Signal processing circuit,
18 Refrigerator,
18a Refrigerator,
20 Control line,
20a Control line
21 Observation line,
21a Observation line,
22 First internal wire,
22a First internal wire,
23 Second internal wire,
23a Second internal wire,
24 Third internal wire,
24a Third internal wire,
100 Quantum computer,
101 Control device,
102 Observation device,
103 Qubit substrate,
104 First electronic circuit,
105 Second electronic circuit,
106 Refrigerator,
107 Control line,
108 Observation line,
151 Instruction decoder,
152 Control switch,
153 Waveform memory,
201 Control signal line,
202 Instruction signal line,
221 Qubit control line,
222 Qubit control line,
223 Qubit control line,
G1 Lattice,
G2 Lattice,
G3 Lattice,
SW (1, 1) to SW (18, 10) Control switch,
S1 Step of generating control signals and command signals,
S2 Step of controlling sending of control signal to each qubit on qubit substrate,
S3 Step of observing qubits on qubit substrate,
S4 Step of executing quantum error correction decoding process
S5 Step of determining whether calculation has been completed.

## Claims

1. A quantum computation controller (1), comprising:
a control signal generator (11);
an observation unit (12) configured to receive an observation signal indicating the state of each qubit; and
a qubit module (13) comprising a qubit substrate (14) on which a plurality of qubits are arranged, a control circuit (15), an observation circuit (16) and a signal processing circuit (17), wherein
the plurality of qubits are grouped into a plurality of groups consisting of a plurality of qubits having the same positional relationship between each qubit and having translational symmetry and are arranged on the qubit substrate (14), wherein
the control signal generator (11) is configured to generate a control signal for performing one or more types of spatially uniform syndrome extraction operation which is an operation for a qubit on the qubit substrate (14) and for performing one or more types of spatially non-uniform logical quantum gate operation, which is an operation for a qubit on the qubit substrate (14), performed less frequently than the syndrome extraction operation and an instruction signal for causing the control circuit (15) to perform control of the syndrome extraction and the logical quantum gate operation, wherein
in the syndrome extraction operation, the control circuit (15) is configured to split the control signal into each of the plurality of groups consisting of a plurality of qubits, control the sending of the control signal to each qubit on the qubit substrate (14) according to the instruction signal, and perform the syndrome extraction operation in common for all groups, and
in the logical quantum gate operation, the control circuit (15) is configured to control the sending of the control signal to each qubit on the qubit substrate according to the instruction signal which sends an individual control signal to each qubit on the qubit substrate and control the logical quantum gate operation performed at a lower frequency than the syndrome extraction operation, wherein
the observation circuit (16) is configured to observe the state of each qubit on which the syndrome extraction operation or the logical quantum gate operation has been performed and wherein
the signal processing circuit (17) is configured to send the observation signal of each qubit to the observation unit (16).

2. The quantum computation controller (1) according to claim 1, wherein the signal processing circuit (17) is configured to perform quantum error correction decoding process.

3. The quantum computation controller (1) according to claims 1 or 2, wherein the number of wires connecting the control signal generator and the qubit module is equal to or less than k' + s where the number of signal lines transmitting control signals is k' and the number of signal lines transmitting instruction signals is s.

4. The quantum computation controller (1) according to claim 3, wherein the signal processing circuit (17) is configured to transmit only the quantum state of the logical qubit to which error correction processing has been applied to the observation unit (12).

5. The quantum computation controller (1) according to any one of claims 1 to 4, wherein the ratio of the frequency of the syndrome extraction operation to the frequency of the logical quantum gate operation is d or more where the code distance of the logical qubit formed by the qubit is d.

6. The quantum computation controller (1) according to any one of claims 1 to 5, wherein the qubit is a solid-state qubit.

7. The quantum computation controller (1) according to any one of claims 1 to 6, wherein at least the qubit module is placed in a refrigerator (18).

8. The quantum computation controller (1) according to claim 7, wherein the qubit operating under cryogenic temperatures includes a superconducting qubit.

9. The quantum computation controller (1) according to any one of claims 1 to 8, wherein the control circuit (15) comprises a memory (153) that stores waveforms of the control signals.

10. A quantum computer comprising a quantum computation controller according to any one of claims 1 to 9.

11. A quantum computation control method using a qubit substrate, a control circuit, an observation circuit, and a signal processing circuit, wherein a plurality of qubits are grouped into a plurality of groups consisting of a plurality of qubits having the same positional relationship between each qubit and are arranged to have translational symmetry on the qubit substrate, the method comprising:
a step (S1) of generating a control signal for performing one or more types of spatially uniform syndrome extraction operation and one or more types of spatially non-uniform logical quantum gate operation performed less frequently than the syndrome extraction operation, which are operations for the qubits on the qubit substrate, and an instruction signal to cause the control circuit to control the syndrome extraction operation and the logical quantum gate operation;
a step of, in the syndrome extraction operation, splitting the control signal into each of the plurality of groups consisting of a plurality of qubits, controlling the sending of the control signal to each qubit on the qubit substrate (14) according to the instruction signal and performing the syndrome extraction operation in common for all groups using the control circuit;
a step of, in the logical quantum gate operation, controlling (S2) the sending of the control signal to each qubit on the qubit substrate according to the instruction signal which sends an individual control signal to each qubit on the qubit substrate and controlling the logical quantum gate operation performed at a lower frequency than the syndrome extraction operation using the control circuit;
observing (S3) the state of each qubit on which the syndrome extraction operation or the logical quantum gate operation has been performed using the observation circuit;
performing (S4) quantum error correction decoding process using the signal processing circuit; and
determining (S5) whether the calculation using the qubits has been completed.

## Patentansprüche

1. Quantenberechnungs-Steuereinheit (1), die Folgendes umfasst:
einen Steuersignalgenerator (11);
eine Beobachtungseinheit (12), die dazu ausgelegt ist, ein Beobachtungssignal zu empfangen, das den Zustand jedes Qubits angibt; und
ein Qubit-Modul (13), das ein Qubit-Substrat (14), auf dem mehrere Qubits angeordnet sind, eine Steuerschaltung (15), eine Beobachtungsschaltung (16) und eine Signalverarbeitungsschaltung (17) umfasst, wobei
die mehreren Qubits in mehrere Gruppen gruppiert sind, die aus mehreren Qubits mit der gleichen Positionsbeziehung zwischen jedem Qubit und mit Translationssymmetrie bestehen, und auf dem Qubit-Substrat (14) angeordnet sind, wobei
der Steuersignalgenerator (11) dazu ausgelegt ist, ein Steuersignal zum Ausführen einer oder mehrerer Arten einer räumlich einheitlichen Syndromextraktionsoperation, die eine Operation für ein Qubit auf dem Qubit-Substrat (14) ist, und zum Ausführen einer oder mehrerer Arten einer räumlich uneinheitlichen logischen Quanten-Gate-Operation, die eine Operation für ein Qubit auf dem Qubit-Substrat (14) ist, die weniger häufig als die Syndromextraktionsoperation ausgeführt wird, und ein Anweisungssignal zum Veranlassen der Steuerschaltung (15), eine Steuerung der Syndromextraktion und der logischen Quanten-Gate-Operation auszuführen, zu erzeugen, wobei
bei der Syndromextraktionsoperation die Steuerschaltung (15) dazu ausgelegt ist, das Steuersignal in jede der mehreren Gruppen, die aus mehreren Qubits bestehen, aufzuteilen, das Senden des Steuersignals an jedes Qubit auf dem Qubit-Substrat (14) gemäß dem Anweisungssignal zu steuern und die Syndromextraktionsoperation gemeinsam für alle Gruppen auszuführen, und
bei der logischen Quanten-Gate-Operation die Steuerschaltung (15) dazu ausgelegt ist, das Senden des Steuersignals an jedes Qubit auf dem Qubit-Substrat gemäß dem Anweisungssignal zu steuern, das ein einzelnes Steuersignal an jedes Qubit auf dem Qubit-Substrat sendet, und die logische Quanten-Gate-Operation zu steuern, die mit einer geringeren Häufigkeit als die Syndromextraktionsoperation ausgeführt wird, wobei
die Beobachtungsschaltung (16) dazu ausgelegt ist, den Zustand jedes Qubits zu beobachten, an dem die Syndromextraktionsoperation oder die logische Quanten-Gate-Operation ausgeführt worden ist, und wobei die Signalverarbeitungsschaltung (17) dazu ausgelegt ist, das Beobachtungssignal jedes Qubits an die Beobachtungseinheit (16) zu senden.

2. Quantenberechnungs-Steuereinheit (1) nach Anspruch 1, wobei die Signalverarbeitungsschaltung (17) dazu ausgelegt ist, einen Quantenfehlerkorrektur-Decodierungsprozess auszuführen.

3. Quantenberechnungs-Steuereinheit (1) nach Anspruch 1 oder 2, wobei die Anzahl der Drähte, die den Steuersignalgenerator und das Qubit-Modul verbinden, gleich oder kleiner als k' + s ist, wobei die Anzahl der Signalleitungen, die Steuersignale übertragen, k' ist und die Anzahl der Signalleitungen, die Anweisungssignale übertragen, s ist

4. Quantenberechnungs-Steuereinheit (1) nach Anspruch 3, wobei die Signalverarbeitungsschaltung (17) dazu ausgelegt ist, nur den Quantenzustand des logischen Qubits, auf das eine Fehlerkorrekturverarbeitung angewendet worden ist, zu der Beobachtungseinheit (12) zu übertragen.

5. Quantenberechnungs-Steuereinheit (1) nach einem der Ansprüche 1 bis 4, wobei das Verhältnis der Häufigkeit der Syndromextraktionsoperation zu der Häufigkeit der logischen Quanten-Gate-Operation d oder größer ist, wobei der Codeabstand des durch das Qubit gebildeten logischen Qubits d ist

6. Quantenberechnungs-Steuereinheit (1) nach einem der Ansprüche 1 bis 5, wobei das Qubit ein Festkörper-Qubit ist.

7. Quantenberechnungs-Steuereinheit (1) nach einem der Ansprüche 1 bis 6, wobei wenigstens das Qubit-Modul in einer Kühlanlage (18) angeordnet ist.

8. Quantenberechnungs-Steuereinheit (1) nach Anspruch 7, wobei das Qubit, das unter kryogenen Temperaturen arbeitet, ein supraleitendes Qubit enthält.

9. Quantenberechnungs-Steuereinheit (1) nach einem der Ansprüche 1 bis 8, wobei die Steuerschaltung (15) einen Speicher (153) umfasst, der die Signalformen der Steuersignale speichert.

10. Quantencomputer, der eine Quantenberechnungs-Steuereinheit nach einem der Ansprüche 1 bis 9 umfasst.

11. Quantenberechnungs-Steuerverfahren unter Verwendung eines Qubit-Substrats, einer Steuerschaltung, einer Beobachtungsschaltung und einer Signalverarbeitungsschaltung, wobei mehrere Qubits in mehrere Gruppen gruppiert sind, die aus mehreren Qubits mit der gleichen Positionsbeziehung zwischen jedem Qubit bestehen, und so angeordnet sind, dass sie eine Translationssymmetrie auf dem Qubit-Substrat aufweisen, wobei das Verfahren Folgendes umfasst:
einen Schritt (S1) des Erzeugens eines Steuersignals zum Ausführen einer oder mehrerer Arten einer räumlich einheitlichen Syndromextraktionsoperation und einer oder mehrerer Arten einer räumlich uneinheitlichen logischen Quanten-Gate-Operation, die weniger häufig als die Syndromextraktionsoperation ausgeführt werden, die Operationen für die Qubits auf dem Qubit-Substrat sind, und eines Anweisungssignals, um die Steuerschaltung zu veranlassen, die Syndromextraktionsoperation und die logische Quanten-Gate-Operation zu steuern;
einen Schritt des Aufteilens des Steuersignals in jede der mehreren Gruppen, die aus mehreren Qubits bestehen, des Steuerns des Sendens des Steuersignals an jedes Qubit auf dem Qubit-Substrat (14) gemäß dem Anweisungssignal und des Ausführens der Syndromextraktionsoperation gemeinsam für alle Gruppen unter Verwendung der Steuerschaltung bei der Syndromextraktionsoperation;
einen Schritt des Steuerns (S2) des Sendens des Steuersignals an jedes Qubit auf dem Qubit-Substrat gemäß dem Anweisungssignal, das ein einzelnes Steuersignal an jedes Qubit auf dem Qubit-Substrat sendet, und des Steuerns der logischen Quanten-Gate-Operation, die mit einer geringeren Häufigkeit als die Syndromextraktionsoperation ausgeführt wird, unter Verwendung der Steuerschaltung bei der logischen Quanten-Gate-Operation;
Beobachten (S3) des Zustands jedes Qubits, an dem die Syndromextraktionsoperation oder die logische Quanten-Gate-Operation ausgeführt worden ist, unter Verwendung der Beobachtungsschaltung;
Ausführen (S4) eines Quantenfehlerkorrektur-Decodierungsprozesses unter Verwendung der Signalverarbeitungsschaltung; und
Bestimmen (S5), ob die Berechnung unter Verwendung der Qubits abgeschlossen worden ist.

## Revendications

1. Dispositif de commande de calcul quantique (1), comprenant :
un générateur de signal de commande (11),
une unité d'observation (12) configurée pour recevoir un signal d'observation indiquant l'état de chaque qubit ; et
un module de qubits (13) comprenant un substrat de qubits (14) sur lequel sont agencés une pluralité de qubits, un circuit de commande (15), un circuit d'observation (16) et un circuit de traitement de signal (17), dans lequel la pluralité de qubits sont groupés en une pluralité de groupes constitués d'une pluralité de qubits ayant la même relation de position entre chaque qubit et présentant une symétrie de translation, et sont agencés sur le substrat de qubits (14), dans lequel
le générateur de signal de commande (11) est configuré pour générer un signal de commande pour exécuter un ou plusieurs types d'opération d'extraction de syndrome spatialement uniforme, qui est une opération destinée à un qubit sur le substrat de qubits (14) et pour exécuter un ou plusieurs types d'opération de porte quantique logique spatialement non uniforme, qui est une opération destinée à un qubit sur le substrat de qubits (14), exécutée moins fréquemment que l'opération d'extraction de syndrome, et un signal d'instruction pour amener le circuit de commande (15) à exécuter la commande de l'extraction de syndrome et de l'opération de porte quantique logique, dans lequel
lors de l'opération d'extraction de syndrome, le circuit de commande (15) est configuré pour diviser le signal de commande en chacun de la pluralité de groupes constitués d'une pluralité de qubits, commander l'envoi du signal de commande à chaque qubit sur le substrat de qubits (14) en fonction du signal d'instruction, et exécuter l'opération d'extraction de syndrome en commun pour tous les groupes, et
lors de l'opération de porte quantique logique, le circuit de commande (15) est configuré pour commander l'envoi du signal de commande à chaque qubit sur le substrat de qubits en fonction du signal d'instruction qui envoie un signal de commande individuel à chaque qubit sur le substrat de qubits, et commander l'opération de porte quantique logique exécutée à une fréquence plus basse que l'opération d'extraction de syndrome, dans lequel
le circuit d'observation (16) est configuré pour observer l'état de chaque qubit sur lequel l'opération d'extraction de syndrome ou l'opération de porte quantique logique a été exécutée et dans lequel le circuit de traitement de signal (17) est configuré pour envoyer le signal d'observation de chaque qubit à l'unité d'observation (16).

2. Dispositif de commande de calcul quantique (1) selon la revendication 1, dans lequel le circuit de traitement de signal (17) est configuré pour exécuter un traitement de décodage de correction d'erreur quantique.

3. Dispositif de commande de calcul quantique (1) selon la revendication 1 ou 2, dans lequel le nombre de fils reliant le générateur de signal de commande et le module de qubits est égal ou inférieur à k' + s, où le nombre de lignes de signaux transmettant des signaux de commande est k' et le nombre de lignes de signaux transmettant des signaux d'instruction est s.

4. Dispositif de commande de calcul quantique (1) selon la revendication 3, dans lequel le circuit de traitement de signal (17) est configuré pour transmettre à l'unité d'observation (12) uniquement l'état quantique du qubit logique auquel un traitement de correction d'erreur a été appliqué.

5. Dispositif de commande de calcul quantique (1) selon l'une quelconque des revendications 1 à 4, dans lequel le rapport de la fréquence de l'opération d'extraction de syndrome à la fréquence de l'opération de porte quantique logique est égal à d ou plus, où d est la distance de code du qubit logique formé par le qubit.

6. Dispositif de commande de calcul quantique (1) selon l'une quelconque des revendications 1 à 5, dans lequel le qubit est un qubit à l'état solide.

7. Dispositif de commande de calcul quantique (1) selon l'une quelconque des revendications 1 à 6, dans lequel au moins le module de qubits est placé dans un réfrigérateur (18).

8. Dispositif de commande de calcul quantique (1) selon la revendication 7, dans lequel le qubit fonctionnant à des températures cryogéniques comprend un qubit supraconducteur.

9. Dispositif de commande de calcul quantique (1) selon l'une quelconque des revendications 1 à 8, dans lequel le circuit de commande (15) comprend une mémoire (153) qui stocke des formes d'onde des signaux de commande.

10. Ordinateur quantique comprenant un dispositif de commande de calcul quantique selon l'une quelconque des revendications 1 à 9.

11. Procédé de commande de calcul quantique utilisant un substrat de qubits, un circuit de commande, un circuit d'observation et un circuit de traitement de signal, dans lequel une pluralité de qubits sont groupés en une pluralité de groupes constitués d'une pluralité de qubits présentant la même relation de position entre chaque qubit, et sont agencés de manière à présenter une symétrie de translation sur le substrat de qubits, le procédé comprenant :
une étape (S1) de génération d'un signal de commande pour exécuter un ou plusieurs types d'opération d'extraction de syndrome spatialement uniforme et un ou plusieurs types d'opération de porte quantique logique spatialement non uniforme exécutées moins fréquemment que l'opération d'extraction de syndrome, qui sont des opérations destinées aux qubits sur le substrat de qubits, et un signal d'instruction pour amener le circuit de commande à commander l'opération d'extraction de syndrome et l'opération de porte quantique logique ;
une étape, lors de l'opération d'extraction de syndrome, de division du signal de commande en chacun de la pluralité de groupes constitués d'une pluralité de qubits, de commande de l'envoi du signal de commande à chaque qubit sur le substrat de qubits (14) en fonction du signal d'instruction et de l'exécution de l'opération d'extraction de syndrome commune pour tous les groupes à l'aide du circuit de commande ;
une étape, lors de l'opération de porte quantique logique, de commande (S2) de l'envoi du signal de commande à chaque qubit sur le substrat de qubits en fonction du signal d'instruction qui envoie un signal de commande individuel à chaque qubit sur le substrat de qubits, et de commande de l'opération de porte quantique logique exécutée à une fréquence plus basse que l'opération d'extraction de syndrome à l'aide du circuit de commande ;
l'observation (S3) de l'état de chaque qubit sur lequel a été exécutée l'opération d'extraction de syndrome ou l'opération de porte quantique logique, à l'aide du circuit d'observation ;
l'exécution (S4) d'un traitement de décodage de correction d'erreur quantique à l'aide du circuit de traitement de signal ; et
le fait de déterminer (S5) si le calcul à l'aide des qubits s'est achevé.
